Europäisches Patentamt

(19) European Patent Office    (11) Publication number:    **O 024 187**

Office européen des brevets    **B1**

(12)    **EUROPEAN PATENT SPECIFICATION**

(45) Date of publication of patent specification: **11.04.84**    (51) Int. Cl.³: **E 02 B  15/04**

(21) Application number: **80302765.5**

(22) Date of filing: **12.08.80**

(54) System for collecting products dumped on the surface of a mass of water.

(30) Priority: **13.08.79 ES  483346**
**21.07.80 ES  493564**

(43) Date of publication of application:
**25.02.81 Bulletin 81/8**

(45) Publication of the grant of the patent:
**11.04.84 Bulletin 84/15**

(84) Designated Contracting States:
**BE DE FR GB IT NL SE**

(56) References cited:
**FR - A - 2 078 968**
**GB - A - 1 296 532**
**US - A - 3 706 382**
**US - A - 3 745 115**

(73) Proprietor: **Carro, Francisco-Javier Jauregui**
**C/Castilla, 14-1o C**
**Santander (ES)**

(72) Inventor: **Carro, Francisco-Javier Jauregui**
**C/Castilla, 14-1o C**
**Santander (ES)**

(74) Representative: **Mosey, Stephen George et al,**
**Marks & Clerk Alpha Tower Suffolk Street**
**Queensway**
**Birmingham B1 1TT (GB)**

Courier Press, Leamington Spa, England.

## System for collecting products dumped on the surface of a mass of water

The present invention relates to a system for collecting products dumped on the surface of a mass of water, and more specifically for collecting petroliferous products which drift on the sea due to discharges from submarine beds, collision of tankers, strandings, or any other reasons and circumstances which give rise to the appearance of the dreaded "black tide".

British Patent Specification No. 1296532 discloses in Figures 10 to 19 thereof such a system in which a pair of frameworks or grid structures is disposed at opposite sides of a ship and towed by the ship through an oil slick or the like. A series of suction devices in the form of barrels is assembled on each grid structure, these barrels being arranged for free up and down movement on rods of the grid structure. Each barrel has a closure member to allow or prevent flow into the barrel.

The object of the present invention is to provide such a system in a convenient and efficient form, by ensuring that suction devices thereof are always in a favourable position independently of the speed of the tanker, the waves and movements of the tanker.

According to the invention there is provided a system for collecting products dumped on the surface of a mass of water, and more specifically for collecting petroliferous products deposited on the surface of the sea, comprising a framework disposed at least one side of a tanker, the height of which framework is such that when the tanker is at ballast, the lower part of such framework will be submerged while the upper part will be above the maximum loading line of the tanker, said framework being attached to the side of the tanker by fixing points, and a series of floating suction devices associated with the framework, characterized in that the or each framework is in the form of a cage secured to the respective side of the tanker so as to follow vertical movements of the tanker, said cage being secured to the side of the tanker by a freely rotatable pivot point, and in that the end suction devices only of said series are attached to said cage, with the remaining suction devices of the series being joined to each other by flexible couplings (A) which interconnect them correlatively and being free to float within the cage, said suction devices having the appropriate dimensions to permit a great sensitivity to the least fluctuating movements of the liquid surface, the face of these suction devices, which is orientated in the direction of travel of the tanker, in use, being provided with an opening which has a height such that, in use, the lower edge thereof will be positioned below the floating line of the suction devices at an approximate depth of 0.01 meters.

With a floating suction device having the dimensions of 2 meters × 0.4 meters × 0.1 meter, then one of its faces, that corresponding to the measurements of 2 meters × 0.1 meter, should be oriented in the direction of travel of the tanker, with the complete length of this face being provided with said opening, the height of which is such that the lower edge of said opening will be situated below the floating line of the suction device, at a depth approximately equal to 0.01 meters.

Preferably this opening communicates with a funnel-shaped inner cavity of the floater or suction device, the smaller-dimensioned zone of which communicates with the outside through a hose which protrudes from the bottom of the floater.

Due to this constructive arrangement, when absorbing with the hose, a mass of water coming from the submerged part of the opening of the floater penetrates through the hose, while the petroliferous products drifting on the liquid surface are simultaneously absorbed.

Advantageously the floaters of each cage are correlatively joined to each other by flexible couplings which permit, in spite of constituting a type of barrier in a direction which could be perpendicular to that of travel of the tanker, each floater to adopt the buoyancy which corresponds thereto, depending on the surface of the sea. This implies that the assembly of floaters will always adopt the form of the superficial profile of the water.

To prevent the pressure of the water during travel of the tanker from causing the suction devices to turn about the respective longitudinal axes thereof, which if occurs would give rise to the positional change of the openings and therefore to an incorrect position, said floaters are preferably provided with horizontal guides situated at the lower and upper parts and at the front and rear zones thereof. These guides will be separated from the inner wall of the cages by approximately 0.01 meters, which permits the floaters a complete freedom of movement in the interior thereof, while preventing them from turning about their respective longitudinal axes.

Conveniently, all the floaters will be provided with check valves to permit, when necessary, the hoses to be primed for a correct and perfect absorption.

Obviously, when the tanks of the ship are being filled by absorption of the floaters, the draft thereof will be increased and therefore the cages will be submerged, which means that the relative position of the floaters will also vary with respect to the cages containing same, since the floaters, on floating, will rise in the interior of said cages.

In practice, the floating line of the floaters will vary slightly inasmuch as, since the suction hoses hang from the bottom thereof, the portion of such line will vary depending on the position of each floater in the interior of the cages. For this reason when the floaters are in the upper part of the cages, they will support a greater weight of the hose and, therefore, the floating lines thereof will raise, the inlet opening will be further submerged and, consequently a greater amount of water than that necessary will enter, in which case the performance of the assembly will drop. Thus, if the inlet of water should be maintained slightly constant, it is recommendable to install a float cut-off valve in each opening of each floater, which permits an also constant inlet of water controlled by an additional floater, whose functioning is completely independent of the main floater.

The suction hoses of each floater descend to the lower part of the cages and are supported at the outer rear part thereof to project upwardly to the deck of the ship where they will be connected to the suction pumps, if the tanker is provided therewith.

If the tanker is only provided with discharge pumps, the hoses of the floaters can be connected to the loading line by means of a siphon once said hoses have been primed, whereby the lower tanks are filled and therefrom, by means of the discharge pumps, the remaining tanks are filled.

The invention will now be described, by way of example, with reference to the accompanying drawings, in which:

Figure 1 represents an assembly or battery of floating suction devices housed in a cage which is mounted at the beam-end of a tanker,

Figure 2 illustrates how the floating suction devices can adopt an inclined position with respect to the side of the tanker;

Figure 3 is a perspective view of one of the floating suction devices;

Figure 4 corresponds generally to an elevation cross-sectional view, along line A—B of Figure 3;

Figure 5 is a plan view of the profile of a tanker with the fittings which are used to adjust the cages,

Figure 6 is a perspective view of another embodiment of the floating suction devices of the system of the invention and

Figures 7 and 8 illustrate a side elevational view and a plan view, respectively, of the embodiment shown in Figure 6.

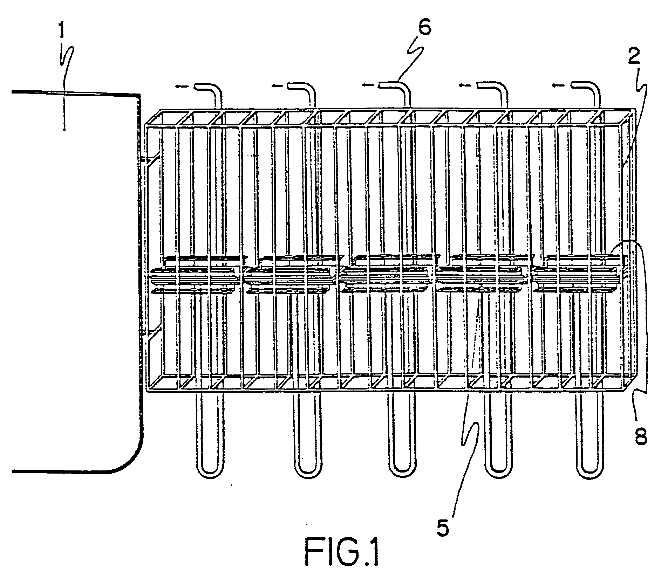

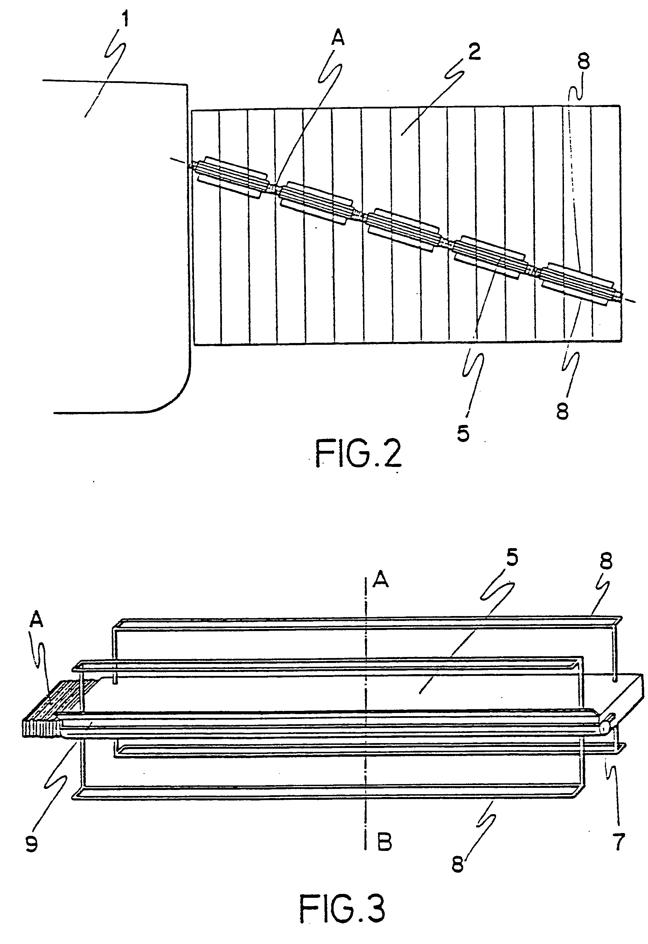

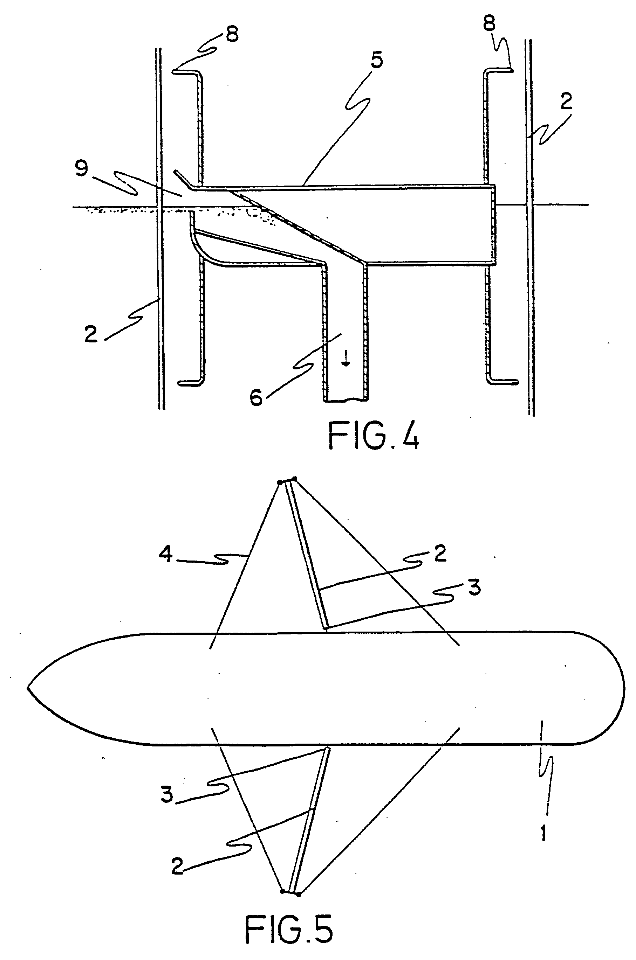

Referring to the Figures, and more specifically to Figures 1 to 5, the embodiment of the invention illustrated consists in arranging at the sides of a tanker 1, frameworks in the form of cages 2, preferably prismatic in shape, which are fixed to the tanker through pivot points 3 so that, by means of fittings 4, such cages 2 can adopt the most suitable position with respect to the longitudinal axis of the tanker.

In each one of these cages 2 is housed a series of suction devices 5, of prismatic shape, correlatively joined by flexible couplings A. As previously mentioned, the suction devices 5 are joined by means of said flexible couplings so that they may adopt the buoyancy corresponding thereto, depending on the surface of the sea, i.e. the assembly or battery of suction devices 5 will adopt the form of the superficial profile of the water.

Likewise, the end suction devices, i.e. those situated at one side and the other of the battery which is formed by the correlative joining of the complete assembly, are likewise jointed to the cages 2 by means of flexible couplings. These couplings will be secured to the cages 2 in such a way that they will permit the vertical displacement of the suction devices along said cages.

Each suction device 5 is connected to suction hoses 6 leading to the tanks of the tanker 1, and the front part thereof has a longitudinal opening 9 and a float cut-off valve 7 which controls the inlet of water through said opening 9. The height of the opening is such that, in use, a lower edge thereof will be positioned below the floating line of the suction devices at an approximate depth of 0.01 meters. The opening 9 communicates with a funnel-shaped inner cavity of the device, the smaller dimensioned zone of the cavity communicating with the outside through the hose 6 which protrudes from the bottom of the device.

Each suction device 5 is joined to horizontal guides 8 which prevent said suction devices from turning on the longitudinal axis thereof, i.e. said guides 8 constitute a type of stabilizer so that the opening 9 is always in the vertical plane, which is the correct position for inlet of water.

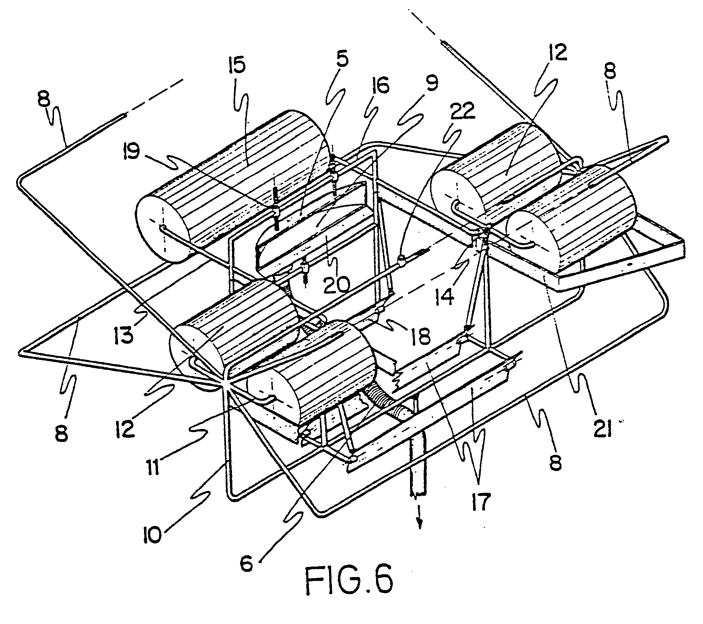

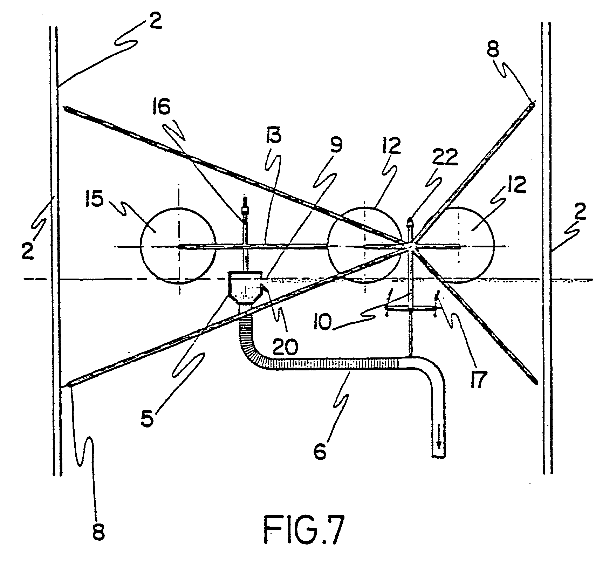

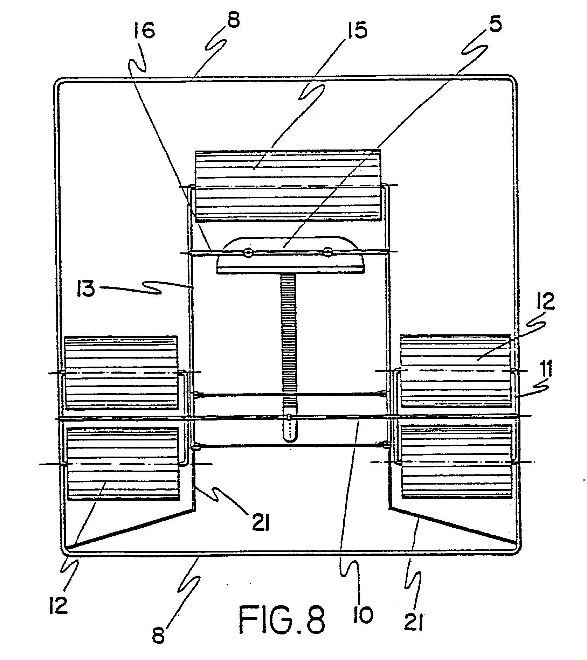

In the alternative embodiment shown in Figures 6 to 8, each suction device 5 is incorporated in a structure formed by means of the functional combination of two frames formed, for example, from cylindrical tube.

One of said frames 10 will be referred to as the main or front frame and, as illustrated in Figure 6, is a generally rectangular frame disposed in a vertical plane. The frame 10 is provided, at its upper ends, with tubular frames 11 which, in the assembly, adopt a horizontal position and constitute support elements for cylindrical or spherical floaters 12. These geometrical shapes are shown since they are the best to obtain a greater sensitivity to buoyancy.

In the assembly of this front or main frame, floaters 12 are arranged at respective opposite sides of the vertical plane in which said rectangular frame 10 lies.

A rear frame, which will be referred to as the secondary frame, is comprised of a first generally U-shaped tubular portion 13 which, at the free ends of its parallel legs, is pivotally joined at points 14 to the frames 11 which support the floaters 12. This first portion 13 of the secondary frame is disposed within the structure, horizontally to receive, at its intermediate transverse leg, another floater 15, while a second tubular portion 16 of this secondary frame forms a type of bridge which, securely joined to the parallel legs of the first line 13, constitutes a self-supporting structure for the floating suction device 5.

Within the general structure of the assembly, it should be pointed out that both the rectangular frame 10, which forms the main or front frame, and the secondary frame, have lower adjustable balancing flaps 17 and 18 in order to prevent, during travel of the tanker, such frames from submerging more than necessary due to the increase in the pressure of the water, i.e. said flaps proportion a constant buoyancy to the assembly.

An important detail is that the suction device 5 is mounted on the bridge like portion 16, so that the height of the device can be adjusted. The means used to adjust the height may be constituted by studs in which nuts 19 are threaded. This is a very important detail, since said means facilitates the arrangement of the opening 9 of the suction device 5 and, in this case, an inclined flange 20 thereof at the exact distance with respect to the level of the liquid mass from which the petroliferous products should be collected.

Said flange 20, whose forward extension can be more or less prolonged, will optionally incorporate an electric resistance of an electric heating circuit so that, with very low temperatures, with the consequent increase in the viscosity of the petroliferous substances, said resistance will provide the products with a raise of temperature so that they may be liquefied as much as possible and in this way facilitate the entrances or introduction of the substances into the suction device.

At both sides of the assembly and at the inner part of the floaters 12, there are arranged plates 21 constituting guides for the products drifting towards the opening 9 of the suction devices 5.

Finally it should be mentioned that the structure which has just been described will be provided, at the top thereof, with hook means 22 which permits the suction devices to be raised from the water once the tanker has terminated the cleaning operation. By securing the cages 2 to the sides of the tanker, the tanker can navigate under relatively normal conditions to the unloading site.

The mixture of sea water and petroliferous products absorbed onto the tanker can be separated on the same tanker by means of suitable devices, said products being stored on the tanker while the clean water is returned to the sea. Also, should the relevant installations for a correct separation not be available, the mixture can be unloaded in installations on land then to proceed to the material separation thereof.

To collect the contaminated waters from the sea, the tanker should adopt the necessary speed, depending on the absorption capacity provided thereto, since the speed of the tanker should never be greater than the absorption capacity of the suction devices 5. However, if this occurs, the products would be stored in the front face of the suction devices which, since they do not have a sufficient absorbing capacity, will pass to the posterior part of the tanker. Therefore, cleaning is rather relative and lacks effectiveness. It is also convenient for the cages 2 to be installed in pairs, i.e. they should preferably be fixed at both sides of the tanker.

As is logical, the number of suction devices and the exact measurements thereof will be determined by the conditions and absorption power of the tanker.

The system for collecting products by means of floating suction devices presents the advantage that the cost thereof is low, a high operative production is obtained, and it is possible, without large financial investments, to install same in any tanker to be used for collecting petroliferous products drifting on the sea.

## Claims

1. A system for collecting products dumped on the surface of a mass of water, and more specifically for collecting petroliferous products deposited on the surface of the sea, comprising a framework (2) disposed at at least one side of a tanker (1), the height of which framework is such that when the tanker is at ballast, the lower part of such framework will be submerged while the upper part will be above the maximum loading line of the tanker, said framework being attached to the side of the tanker by fixing points (3), and a series of floating suction devices (5) associated with the framework, characterized in that the or each framework is in the form of a cage (2) secured to the respective side of the tanker (1) so as to follow vertical movements of the tanker, said cage (2) being secured to the side of the tanker by a freely rotatable pivot point (3), and in that the end suction devices only of said series are attached to said cage, with the remaining suction devices (5) of the series being joined to each other by flexible couplings (A) which interconnect them correlatively and being free to float within the cage, said suction devices having the appropriate dimensions to permit a great sensitivity to the least fluctuating movements of the liquid surface, the face of these suction devices, which is orientated in the direction of travel of the tanker, in use, being provided with an opening (9) which has a height such that, in use, the lower edge thereof will be positioned below the floating line of the suction devices at an approximate depth of 0.01 meters.

2. A system as claimed in claim 1, characterized in that the opening (9) of each one of the suction devices communicates with a funnel-shaped inner cavity thereof, the smaller dimensioned zone of which cavity communicates with the outside through a hose (6) which protrudes from the bottom of the suction device.

3. A system as claimed in claim 1 or claim 2, characterized in that the end suction devices are joined to the cage by respective flexible couplings.

4. A system as claimed in any one of the preceding claims, characterized in that the suction devices are provided with horizontal guides (8), to prevent said suction devices from turning on their respective longitudinal axes, as well as check valves to prime the suction hoses.

5. A system as claimed in any one of the preceding claims, characterized in that each suction device is incorporated in a structure comprising main and secondary frames, the main frame (10) being generally rectangular and disposed in a vertical plane, in use, and provided at its upper ends with frames (11) positioned horizontally to support cylindrical or spherical floaters (12) which are arranged at respective opposite sides of the vertical plane in which said main frame lies, the secondary frame being made up of a generally U-shaped first portion (13), the free ends of the parallel legs thereof being pivotally joined to the frames which support said cylindrical or spherical floaters, said first portion being arranged, in use, in a horizontal plane and having a further floater (15) at its intermediate leg, a second portion (16) of the secondary frame forming a bridge which is joined to the parallel legs of said first portion and constitutes a self-supporting structure for the suction device (5).

6. A system as claimed in claim 5, characterized in that the rectangular frame which forms the main frame (10) has a pair of centrally disposed parallel balancing flaps (17) at opposite sides of its lower leg, the second portion (16) of the secondary frame likewise being provided at the bottom thereof with at least one such balancing flap (18).

7. A system as claimed in any one of claims 5 and 6, characterized in that the suction device (5) is mounted on the second bridge-like portion (16) so that its height can be adjusted relative thereto.

8. A system as claimed in any one of claims 1 to 7, characterized in that the cages (2) are prismatic in shape.

9. A system as claimed in any one of claims 1 to 4, characterized in that said suction devices (5) are prismatic in shape.

10. A system as claimed in any one of claims 5 to 7, characterized in that a flange (20) along a lower edge of said opening (9) of the suction pump is provided with an electric resistance for heating substances entering said opening, in use.

## Revendications

1. Système pour recueillir des roduits déversés à la surface d'une étendue d'eau et plus particulièrement pour recueillir des produits pétroliers répandus à la surface de la mer, comprenant une ossature (2) disposée sur au moins un côté d'un bateau-réservoir (1) et dont la hauteur est telle que lorsque ledit bateau-réservoir est seulement sur lest, la partie inférieure de l'ossature soit immergée, tandis que sa partie supérieure soit au-dessus du niveau de chargement maximum dudit bateau-réservoir, ladite ossature étant raccordée au côté dudit bateau-réservoir par des points de fixation (3), et une série de dispositifs d'aspiration, flottants, (5), associés à l'ossature, caractérisé en ce que la ou chaque ossature a la forme d'une cage (2) fixée au côté correspondant du bateau-réservoir (1) de façon à suivre les mouvements verticaux de celui-ci, ladite cage étant fixée aux côtés du bateau-réservoir par un point d'articulation à rotation libre (3) et en ce que seulement les dispositifs d'aspiration d'extrémité de ladite série sont reliés à ladite cage tandis que les autres dispositifs d'aspiration (5) de ladite série sont reliés les uns aux autres par des raccords flexibles (A) réalisant corrélativement leur interconnection, et peuvent flotter librement à l'intérieur de la cage, lesdits dispositifs d'aspiration ayant des dimensions appropriées pour acquérir une grande sensibilité aux moindres mouvements de la surface liquide, et en ce que la surface frontale de ces dispositifs d'aspiration, qui est orientée dans la direction de déplacement du bateau-réservoir, en utilisation, est pourvue d'une ouverture (9) dont la hauteur est telle que son bord inférieur soit situé au-dessous de la ligne de flotaison des dispositifs d'aspiration, en utilisation, à une profondeur d'environ un centimètre.

2. Système selon la revendication 1, caractérisé en ce que l'ouverture de chaque dispositif d'aspiration communique avec une cavité interne en forme d'entonnoir et en ce que la zone la plus étroite de cette cavité communique avec l'extérieur par un conduit (6) raccordé au fond dudit dispositif d'aspiration.

3. Système selon la revendication 1 ou 2, caractérisé en ce que lesdits dispositifs d'aspiration d'extrémité sont relieés à ladite cage par des raccords flexibles respectifs.

4. Système selon l'une quelconque des revendications précédentes, caractérisé en ce que les dispositifs d'aspiration sont équipés de guides horizontaux (8) pour les empêcher de tourner sur leurs axes longitudinaux respectifs, ainsi que de soupapes de retenue pour amorcer les conduits d'aspiration.

5. Système selon l'une quelconque des revendications précédentes, caractérisé en ce que chaque dispositif d'aspiration est intégré à une structure comprenant un cadre principal et un cadre secondaire, en ce que le cadre principal (10) est de forme générale rectangulaire et disposé dans un plan vertical en utilisation et est pourvu à ses extrémités supérieures de cadres horizontaux pour supporter des flotteurs (12) cylindriques ou sphériques, lesquels sont respectivement disposés sur les côtés du plan vertical dans lequel se situe ledit cadre principal et en ce que le cadre secondaire est constitué:

— d'une première partie (13) en forme générale de "U" les extrémités libres des montants parallèles de cette partie étant raccordées de façon pivotante aux cadres précités qui supportent lesdits flotteurs cylindriques ou sphériques, ladite première partie étant agencée dans un plan horizontal, en utilisation, et comportant un autre flotteur (15) sur son montant intermédaire,

— d'une seconde partie (16) formant un pont raccordé aux montants parallèles de ladite première partie et constituant une structure autoportante pour le dispositif d'aspiration (5).

6. Système selon la revendication 5, caractérisé en ce que le cadre principal de forme générale rectangulaire (10) est pourvu d'une paire d'ailerons d'équilibrage, de part et d'autre de son montant inférieur, la seconde partie (16) dudit cadre secondaire étant également pourvue d'au moins un tel aileron d'équilibrage (18) à sa partie inférieure.

7. Système selon la revendication 5 ou 6, caractérisé en ce que le dispositif d'aspiration (5) est monté sur ladite partie (16) en forme de pont de façon que sa hauteur puisse être ajustée par rapport à celle-ci.

8. Système selon l'une des revendications 1 à 7, caractérisé en ce que lesdites cages (2) sont de forme prismatiques.

9. Système selon l'une des revendications 1 à 4, caractérisé en ce que lesdits dispositifs d'aspiration (5) sont de forme prismatique.

10. Système selon l'une des revendications 5 à 7, caractérisé en ce qu'un talon (20) disposé le long du bord inférieur de ladite ouverture (9) du dispositif d'aspiration est pourvu d'une resistance electrique pour chauffer les substances qui pénètrent dans ladite ouverture, en utilisation.

## Patentansprüche

1. System zum Einsammeln von Produkten, die auf die Oberfläche einer Wassermenge gestürzt werden, insbesondere zum Einsammeln von auf die Meeresoberfläche abgelassenen erdölhaltigen Produkten, mit einem auf wenigstens einer Seite eines Tankers (1) angeordneten Rahmenwerk (2), dessen Höhe derart ist, daß bei mit Ballast fahrendem Tanker der untere Teil des Rahmenwerks untertaucht, während der obere Teil sich oberhalb der Höchstladelinie des Tankers befindet, wobei das Rahmenwerk an der Seite des Tankers mittels Feststellpunkten (3) befestigt ist, und mit einer Reihe von dem Rahmenwerk zugeordneten schwimmenden Saugvorrichtungen (5), dadurch gekennzeichnet, daß das oder jedes Rahmenwerk als Käfig (2) ausgebildet ist, der an der jeweiligen Seite des Tankers (1) so gesichert ist, daß er Vertikalbewegungen des Tankers folgt, wobei der Käfig (2) an der Seite des Tankers mittels eines frei drehbaren Drehpunkts (3) gesichert ist, und daß nur die Endsaugvorrichtungen der vorgenannten Reihe an dem Käfig befestigt sind, wobei die übrigen Saugvorrichtungen (5) der Reihe miteinander über sie gegenseitig verbindende elastische Kupplungen (A) gekoppelt und im Käfig frei schwimmend vorgesehen sind und die Saugvorrichtungen solche Dimensionen haben, daß sie gegenüber den geringsten Fluktuationsbewegungen der Flüssigkeitsoberfläche empfindlich sind, und die Endfläche jeder Saugvorrichtung, die im Betrieb in Fahrtrichtung des Tankers orientiert ist, eine Öffnung (9) solcher Höhe aufweist, daß im Betrieb deren Unterkante unterhalb der Schwimmlinie der Saugvorrichtungen in einen ungefähren Tiefe von 0,01 m positioniert ist.

2. Einrichtung nach Anspruch 1, dadurch gekennzeichnet, daß die Öffnung (9) jeder Saugvorrichtung mit einem trichterförmigen inneren Hohlraum der Vorrichtung in Verbindung steht, wobei die Zone kleinerer Abmessung des Hohlraums mit der Außenseite über einen Schlauch (6), der vom Boden der Saugvorrichtung absteht, verbunden ist.

3. Einrichtung nach Anspruch 1 oder 2, dadurch gekennzeichnet, daß die Endsaugvorrichtungen mit dem Käfig durch jeweilige elastische Kupplungen verbunden sind.

4. Einrichtung nach einem der vorhergehenden Ansprüche, dadurch gekennzeichnet, daß die Saufvorrichtungen horizontale Führungen (8), die verhindern, daß sich die Saufvorrichtungen um ihre jeweiligen Längsachsen drehen, sowie Absperrventile, die die Saufschläuche zum Ansaugen vorbereiten, aufweisen.

5. Einrichtung nach einem der vorhergehenden Ansprüche, dadurch gekennzeichnet, daß jede Saugvorrichtung in einen Haupt- und Sekundärrahmen umfassenden Aufbau eingebaut ist, wobei der Hauptrahmen (10) im wesentlichen rechtwinklig und im Betrieb in einer Vertikalebene angeordnet ist und an seinem Oberende Streben (11) aufweist, die horizontal angeordnet sind und zylindrische oder kufelförmige Schwimmkörper (12) haltern, die an jeweils entgegengesetzten Seiten der Vertikalebene, in der der Hauptrahmen liegt, angeordnet sind, und der Sekundärrahmen einen im wesentlichen U-förmigen ersten Abschnitt (13) aufweist, dessen parallele Schenkel mit ihren freien Enden schwenkbar mit den die zylindrischen oder kugelförmigen Schwimmkörper halternden Streben verbunden sind, wobei der erste Abschnitt im Betrieb in einer Horizontalebene liegt und an seinem Zwischenschenkel einen weiteren Schwimmkörper (15) aufweist, und wobei ein zweiter Abschnitt (16) des Sekundärrahmens eine Brücke bildet, die mit den parallelen Schenkeln des ersten Abschnitts verbunden ist und einen selbsttragenden Aufbau für die Saugvorrichtung (5) bildet.

6. Einrichtung nach Anspruch 5, dadurch gekennzeichnet, daß der den Hauptrahmen (10) bildende rechteckige Rahmen zwei mittig angeordnete parallele Ausgleichsklappen auf entgegengesetzten Seiten seines unteren Schenkels aufweist, und dass der zweite Abschnitt (16) des Sekundärrahmens ebenfalls an seiner Unterseite mit wenigstens einer solchen Ausgleichsklappe (18) versehen ist.

7. Einrichtung nach einem der Ansprüche 5 oder 6, dadurch gekennzeichnet, dass die Saugvorrichtung (5) an dem zweiten brückenähnlichen Abschnitt (16) so befestigt ist, dass ihre Hohe relativ zu diesem einstellbar ist.

8. Einrichtung nach einem der Ansprüche 1—7, dadurch gekennzeichnet, dass die Käfige (2) Prismenform haben.

9. Einrichtung nach einem der Ansprüche 1—4, dadurch gekennzeichnet, dass die Saugvorrichtungen (5) Prismenform haben.

10. Einrichtung nach einem der Anspruche 5—7, dadurch gekennzeichnet, dass eine entlang einer Unterkante der Öffnung (9) der Saugpumpe verlaufender Flansch (20) einen elektrischen Widerstand zum Erwärmen von während des Betriebs in die Öffnung eintretenden Substanzen aufweist.

7

FIG.1

FIG.2

FIG.3

FIG.4

FIG.5

FIG.6

FIG.7

FIG.8